Europäisches Patentamt

European Patent Office

Office européen des brevets

(11) Publication number: 0 355 956
A2

# EUROPEAN PATENT APPLICATION

(21) Application number: 89306257.0

(51) Int. Cl.⁴: H04N 5/217

(22) Date of filing: 21.06.89

The title of the invention has been amended (Guidelines for Examination in the EPO, A-III, 7.3).

(30) Priority: 21.06.88 GB 8814665

(43) Date of publication of application:
28.02.90 Bulletin 90/09

(84) Designated Contracting States:
DE FR NL

(71) Applicant: GEC-Marconi Limited
The Grove Warren Lane
Stanmore Middlesex HA7 4LY(GB)

(72) Inventor: Spencer, Simon Howard
"Padarn" Hopping Jack's Lane
Danbury Chelmsford Essex(GB)

(74) Representative: Tolfree, Roger Keith et al
The General Electric Co. p.l.c. Patent
Department GEC-Marconi Research Centre
West Hanningfield Road
Great Baddow, Chelmsford Essex CM2
8HN(GB)

(54) Signal processing for cancelling perturbations.

(57) An apparatus for extracting the useful signal from a sampled scanned CCD imaging device utilises an RF detection method by processing the upper frequency portion of the spectrum, containing the useful information in coded form as a modulation of a carrier wave. The signal is balanced demodulated (4) and subsequently low-pass filtered (6).

FIG.2.

## Signal Processing

This invention relates to signal processing and in particular it relates to the processing of the signal from a solid state camera such as a charged coupled device (CCD) camera and to a method for extracting the useful signal from the output from the solid state elements.

A solid state camera generally comprises an array of imaging elements such as CCD's, which are responsive to light as known in the art. Each element in the array is consecutively sampled at a fixed frequency, and the sampled output contains the useful data indicative of the intensity of light received by that sensor at that time, which data must be extracted from the signal. This useful signal is present with a high speed pixel clock wave form and also with a certain degree of noise.

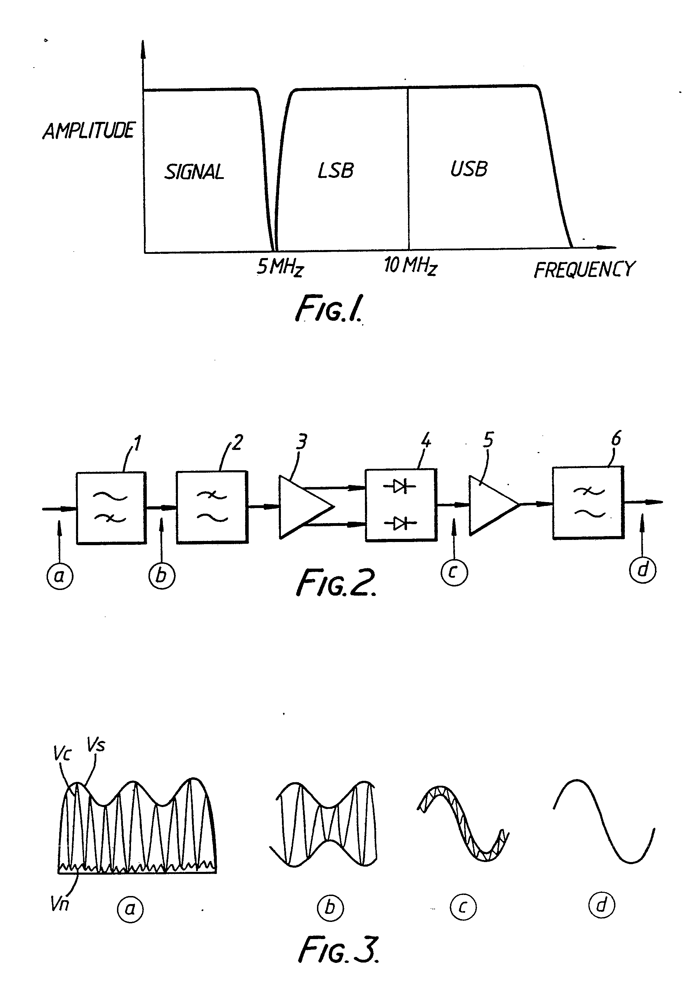

A typical signal spectrum emerging from a sample CCD device is as shown in Figure 1 for a signal which is sampled at a sampling rate of 10MHz. The useful signal information is held in the lower frequency portion of the spectrum from 0-5MHz but this portion of the spectrum also includes several degrading noise components such as random noise and logic noise. Since a sampling frequency of 10MHz is used and due to the manner in which CCD's, or other solid state elements, are conventionally scanned, the upper frequency portions of the spectrum contains a central carrier frequency comprising the 10 MHz signal and also contains the useful information as a modulation of the central carrier frequency. That is, the signal information, in addition to being in the lower frequency portion of the spectrum is also carried in a coded form in upper and lower side bands (USB and LSB respectively) of the higher frequency portion. This is to some extent similar to the way in which an RF signal is transmitted.

Conventionally, the useful signal has been extracted mainly by using a low pass filtering technique which removes the higher frequency portion of the signal; in this example, that portion of the spectrum above 5MHz. A large degree of residual noise is however passed along with the useful signal which tends to degrade the final image. Other systems such as double-correlation sampling (DCS), have been used which work on the upper part of the spectrum and achieve their function by generating a signal at the nominal carrier frequency, multiplying the two signals together to give sum and different frequencies and then low pass filtering to obtain the modulation signal, i.e. the useful signal. Although this latter type of processing does tend to reduce both random and clock noise components, it is in practice difficult to perform since precise phase synchronisation of the generated signal must be achieved with the carrier wave transmitted with the video information. Since the carrier wave can be of the order of 10MHz then accurate synchronisation can clearly be a problem. If the phases are not identical then the performance is seriously impaired.

The present invention provides a method of processing data from a solid state camera which achieves the performance of a DCS system without the need for generating a precisely synchronised carrier signal.

According to the present invention there is provided a method of extracting the useful signal from a sampled solid state imaging sensor array which is sampled at a sampling frequency; comprising, filtering the signal so as to retain a signal comprising the sampling frequency and upper and lower side bands containing useful information, and demodulating the filtered signal with a balanced demodulator.

Preferably a high pass filter is used to remove those portions of the signal of less than half the sampling frequency. A notch filter may additionally be used to remove harmonics.

The demodulated signal is in a preferred embodiment filtered with a low pass filter to remove residual clutter and noise effects.

In a second aspect the invention provides apparatus for extracting the useful signal from the signal output from a scanned solid state imaging device the signal being sampled at a certain frequency, which apparatus comprises a high pass filter for extracting that portion of the signal containing the sampling frequency and upper and lower side bands, means for balanced demodulating the filtered signal and means for low pass filtering the demodulated signal.

Embodiments of the invention will now be described by way of example only with reference to the accompanying drawings in which:

Figure 1 shows a signal spectrum.

Figure 2 shows schematically apparatus used for processing the output from a sampled charge-coupled device.

Figure 3 shows representative wave forms at various stages as a signal passes through the apparatus of Figure 2.

Figure 4 shows a practical realisation of a signal processing circuit.

Imaging systems which use a solid state device, such as a charge-coupled device, as their sensing elements to replace the conventional electron tube are well known. Imaging cameras using the technique generally include an array of CCD's, the number of which may range from a 6 x 6 array up to perhaps 1000 x 1000 or even more. Clearly, the higher the density the higher the resolution of such a system. The operation of such devices is well known. Briefly the device is exposed to light, or other radiation, for a fixed period of time and the charge which is collected on each of the CCD elements is subsequently sampled at a fast pixel rate, typically 10 MHz, by a scanning technique and applied, after processing, to a television screen, video apparatus, or other processing apparatus. The frequency spectrum of a signal emerging from a typical CCD array is shown in Figure 1 as described above.

The imaging elements of a typical CCD array are not shown in the present specification since this invention is concerned with the processing of the data rather than actual collection of the visual information.

Referring to Figures 2 and 3, the sampled scanned signal from the CCD array is initially shown in Figure 3 and comprises the useful signal Vs, which is shown in this example as a low frequency sinusidal wave form, together with a high frequency clock wave form Vc and various noise components of which a low level reset noise component Vn is shown. The signal is passed through a high pass filter 1 having a 5MHz cut-off frequency which allows the top part of the spectrum of Figure 1 to pass and blocks the low frequency part up to 5MHz. This lower frequency part contains the "raw" signal information together with most of the noise.

The resultant signal after high pass filtering is as shown in Figure 3b and is in the form of a wave form symetrical about 0 volts and comprising the clock wave form in the form of a carrier wave modulated by a lower frequency signal which is indicitive of the useful image signal. This signal may optionally be passed through a low pass filter of cut-off frequency perhaps 15 MHz which serves to remove any very high frequency harmonics. Thus in effect the high pass filter 1 and low pass filter 2 together act as a band pass filter to pass the higher band shown in Figure 1. It should be noted that low pass filter 2 is a preferred but optional feature. The output signal from the low pass filter 2 is amplified 3 and applied to a balanced demodulator 4. This could simply comprises two diodes but is preferably a rectifier bridge network.

The demodulator 4 achieves the effect of inverting those parts of the signal of b which are at a negative voltage and acts as a detector in a similar way to an RF detector. Thus, the modulating signal is detected from the carrier signal. It will be noted that the modulation signal is of course the useful signal from the CCDs containing the visual information. Thus, the wave shown in Figure 3c is obtained at the output of demodulator, which signal is of the desired form containing the image data but will still at this stage contain an amount of residual noise. It is clearly desirable to attempt to remove more of the noise and to this end the signal is further amplified 5 and passed through a low pass filter 6 typically of 5MHz. This removes most of the high frequency ripples shown in Figure 3 and the "clean" wave form of Figure d is produced. This wave form is then applied to a television screen, video recording apparatus or any other apparatus to which a video signal is accquired.

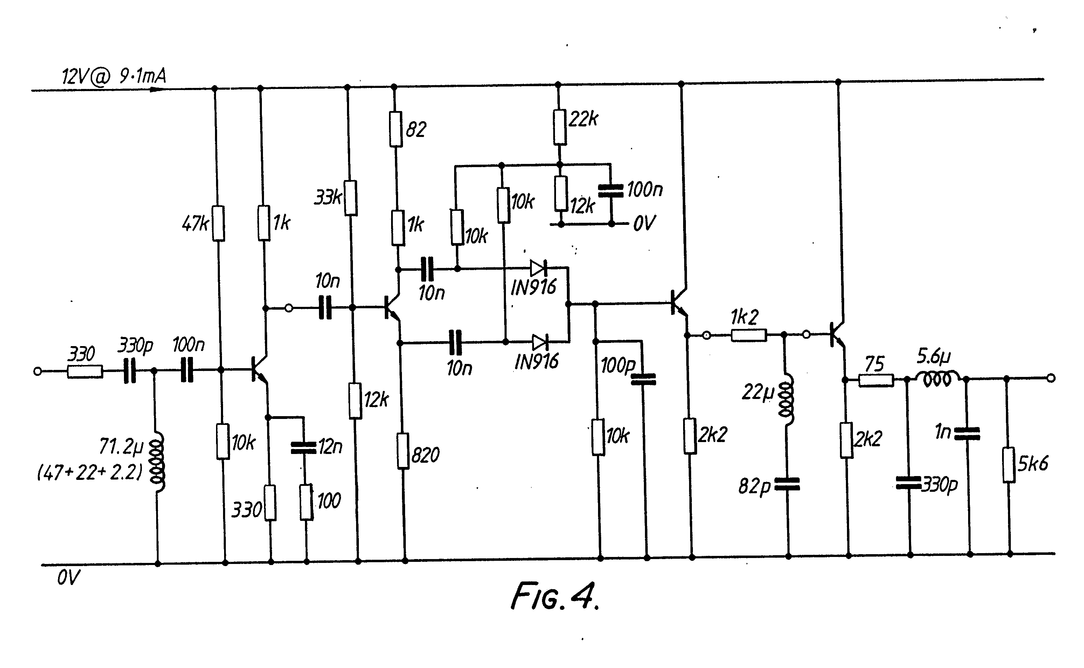

It is thus seen that the process according to the present invention is basically one of RF processing, using a typical RF demodulating technique, and does not involve generation of any clocking signals within the apparatus. It is therefore highly useful for very high-speed cameras and does not require complex phase correction circuitry. A typical practical embodiment is shown in Figure 4. The circuit, in which the component values given are for a sensor of 576 vertical x 200 horizontal resolution, clocked at 3.8 MHz, will not be described further in detail but it should be noted that such a circuit as this is ideally suited to surface mount or hybrid technology and hence it is relatively cheap and straight forward to produce. The circuit also has a low power consumption and a high degree of pixel clock reduction. Typically the pixel clock noise is reduced by 50 db's, a 20 db reduction being obtained from the balanced modulator and a further 30db from the output filter. Those noise components which exist in the low frequency part of the spectrum are significantly reduced or completely elimitated by the system, and these include Inverse frequency noise which occur within the image sensor and the reset noise and existing due to the charge- coupling processor within the sensor. Several logic noise components also exist within this low frequency portion and are also significantly reduced or eliminated. These include frame rate noise; typically 25Hz, transfer clock noise, typically 500KHz and TV time clock noise.

The signal processing apparatus may be used with a colour video signal and can be adapted for this purpose by the inclusion of multiple parallel stages covering the chrominance information.

## Claims

1. A method of extracting the useful signal from a sampled solid state imaging sensor array which is sampled at a sampling frequency; comprising, filtering the signal so as to retain a signal comprising the sampling frequency and upper and lower side bands containing useful information, and demodulating the filtered signal with a balanced demodulator.

2. A method as claimed in claim 1 wherein the filtering is high pass filtering with a cut-off frequency of half the sampling frequency.

3. A method as claimed in claim 1 or claim 2 wherein the demodulated signal is low pass filtered.

4. Apparatus for extracting the useful signal from the signal output from a scanned solid state imaging device, the device being sampled at a certain frequency, which apparatus comprises a filter for extracting that portion of the signal containing the sampling frequency and upper and lower side bands, means for balanced demodulating the filtered signal and means for low pass filtering the demodulated signal.

5. Apparatus as claimed in claim 4 wherein the filter is a high pass filter.

AMPLITUDE

SIGNAL    LSB    USB

5 MHz    10 MHz    FREQUENCY

*Fig. I.*

1    2    3    4    5    6

a    b    c    d

*Fig. 2.*

Vc  Vs

Vn    a    b    c    d

*Fig. 3.*

FIG. 4.